Europäisches Patentamt

European Patent Office

Office européen des brevets

(19)

(11) Veröffentlichungsnummer: **0 387 727**

**A2**

(12) # EUROPÄISCHE PATENTANMELDUNG

(21) Anmeldenummer: **90104568.2**

(22) Anmeldetag: **10.03.90**

(51) Int. Cl.5: **B09B 3/00**

(30) Priorität: **13.03.89 DE 3908125**

(43) Veröffentlichungstag der Anmeldung:
**19.09.90 Patentblatt 90/38**

(84) Benannte Vertragsstaaten:
**AT BE CH DE ES FR GB GR IT LI LU NL SE**

(71) Anmelder: **HÜLS AKTIENGESELLSCHAFT**
**Paul-Baumann-Strasse 1 Postfach 1320**
**D-4370 Marl 1(DE)**

(72) Erfinder: **Hitze, Reiner, Dr.**
**Schillerstrasse 31**
**D-5210 Troisdorf(DE)**
Erfinder: **Fischer, Joachim, Dipl.-Ing.**
**Saarwerdenstrasse 41**
**D-4047 Dormagen 5(DE)**

(54) **Verfestigendes Gemisch aus Rückständen.**

(57) Es wird vorgeschlagen, Rückstände aus industriellen Fertigungen und besonders Rückstände aus Verbrennungsanlagen und von diesen besonders Stäube zu einem verfestigenden Gemisch, vorzugsweise in Form von Formkörpern zu verarbeiten durch Zusatz von Alkalisilikat, Alkalialuminat sowie Wasser. Die Lagerung auf Deponien sowie die Verwendung als Baustoffe ist möglich.

EP 0 387 727 A2

## Verfestigendes Gemisch aus Rückständen

Nicht mehr verwertbare Rückstände entstehen bei zahlreichen industriellen Herstellverfahren und in neuerer Zeit besonders bei der Verbrennung von Hausmüll und brennbaren industriellen Abfallstoffen. Besondere Schwierigkeiten entstehen durch Abfallstoffe in Form von Stäuben aus Verbrennungsanlagen und der Entschwefelung von Rauchgas.

Solche Abfallstoffe werden auf Deponien gelagert, wobei jedoch Schwierigkeiten auftreten können. Die Rückstände enthalten häufig durch Wasser auswaschbare Stoffe, hauptsächlich Kalzium- und Natriumsalze, vorwiegend als Chloride und Sulfate, sowie Metall- oder Schwermetallsalze oder deren Oxide, welche jedoch so gebunden werden müssen, daß sie nicht in das Grundwasser entweichen. Stäube bereiten auf Deponien besondere Schwierigkeiten, weil Stäube ein geringes Gewicht besitzen und das Befahren der Deponie mit Fahrzeugen verhindern. Zahlreiche Rückstände und Abfallstoffe haben ein hohes Volumen, beispielsweise poröse Schlacken oder Stäube, und verbrauchen dann knappes Volumen von Deponien. Die Wiederverwertung von Rückständen und Abfallstoffen erfolgt in geringem Umfang.

Es bestand daher die Aufgabe, Rückstände und Abfallstoffe so zu verfestigen, daß auf Deponien die Schadstoffe gebunden sind und die Rückstände ein hohes Gewicht je Volumeneinheit haben und die weitere Aufgabe, in beispielsweise Formkörpern die Schadstoffe von Rückständen und Abfallstoffen so sicher zu binden und gleichzeitig eine so hohe Festigkeit der verfestigten Gemische aus Rückständen und Abfallstoffen zu erreichen, daß diese beispielsweise als Baustoffe erneut verwendbar sind. Eine besondere Aufgabe bestand in der Verfestigung von Stäuben.

Es ist bekannt, Härtungsmittel wie beispielsweise Kieselgur, Flugasche, Gips, Anhydrid oder Zement zur Verfestigung von Materialien zu verwenden. Diese Verfahren haben jedoch den Nachteil, daß wertvolle Baustoffe in Abfallstoffe umgewandelt werden. Es entstehen erhebliche Kosten und es werden große Mengen von Härtungsmitteln verbraucht, die bei Lagerung auf der Deponie zusätzlich Platz d.h. Volumen verbrauchen. Weiterhin ist es bekannt, Abfallstoffe wie Verbrennungsrückstände von Kraftwerken zu Baustoffen durch Zusatz von z.B. Zement zu verarbei ten.

Gegenstand der Erfindung ist daher ein verfestigendes Gemisch aus Rückständen gemäß Patentanspruch und den Unteransprüchen sowie ein Verfahren zur Herstellung des verfestigenden Gemisches nach dem Verfahrensanspruch und dessen Unteransprüchen.

Es wurde nämlich gefunden, daß bereits geringe Mengen des erfindungsgemäßen Bindemittels und Verfestigungsmittels ausreichen, um in Gegenwart von Wasser Rückstände und besonders auch schwierig handhabbare staubförmige Rückstände so zu binden, daß diese sich verfestigen und auf einer Deponie beispielsweise als Formkörper oder als verfestigende nicht geformte Masse gelagert werden können oder als Formkörper als beispielsweise Baustoffe dienen können. Weiterhin wurde gefunden, daß in den Rückständen gegebenenfalls enthaltene Schadstoffe so gebunden werden, daß die Schadstoffe nicht entweichen können und insbesondere nicht durch Wasser eluiert d.h. aus dem verfestigten Gemisch entfernt werden.

Erfindungsgemäß wird daher die Aufgabe gelöst, Rückstände mit gegebenenfalls Gehalten von Schadstoffen auf einer Deponie sicher zu lagern und das erfindungsgemäße verfestigte Gemisch als neuen Deponiestoff so auf der Deponie zu lagern, daß möglichst wenig Volumen der Deponie beansprucht wird. Insbesondere können lose Stäube zu ausreichend verfestigten und zu auf der Deponie befahrbaren Formkörpern oder erhärtenden Gießungen verformt werden, welche ein hohes Gewicht je Raumeinheit haben.

Weiterhin wird die Aufgabe erfüllt, bestimmte Rückstände erneut zu verwenden, beispielsweise als Baustoffe.

Erfindungsgemäß wird als Bindemittel zum Zwecke der Verfestigung der Rückstände ein Gemisch aus Alkalisilikat und Alkalialuminat verwendet, das in fester Form oder gegebenenfalls gelöst in Wasser zugesetzt werden kann. Von diesem Gemisch aus Alkalisilikat und Alkalialuminat werden nur 0,05 bis 5 Gew.-%, vorzugsweise 0,2 bis 1,5 Gew.-%, des Alkalisilikats und 0,05 bis 5 Gew.-%, vorzugsweise 0,1 bis 1,5 Gew.-% des Alkalialuminats, jeweils bezogen auf den Feststoff der Rückstände benötigt. Der zuzusetzende Gehalt von Wasser soll ein Gewichtsverhältnis von Wasser zu Feststoff der Rückstände von allgemein 0,05 bis 0,7, vorzugsweise 0,2 bis 0,5 d.h. im allgemeinen Falle 5 Gew.-Teilen Wasser je 100 Gew.-Teilen Rückstände bis 70 Gewichtsteilen Wasser je 100 Gewichtsteilen Rückstände haben. Das Gewichtsverhältnis von Wasser zu Feststoffen der Rückstände im Bereich von vorzugsweise 0,2 bis 0,5 ergibt je nach Art der Rückstände ein durch Druck zu verfestigendes Gemisch, das anschließend zu einem festen Formkörper abbindet. Rückstände in Form von z.B. Schlacken mit geringerer Oberfläche erfordern lediglich Bindemittel im unteren allgemeinen Bereich. Soweit rührfähige, pumpbare und gießfähige Gemische hergestellt werden sollen, ist es zweckmäßig vergleichsweise hohe Wassergehalte im Bereich von 0,35 bis 0,7 des Gewichtsverhältnisses von Wasser zu Feststoff d.h. 35 bis 70 Gewichtsteile Wasser je 100 Gewichtsteile Feststoff der Rückstände zu verwenden.

Das Gewichtsverhältnis Alkalisilikat zu Alkalialuminat kann im Bereich von 1 : 100 bis 100 : 1 liegen, jedoch ist bevorzugt 4 : 1 bis 1 : 1 Gewichtsteile Alkalisilikat zu Alkalialuminat zu verwenden.

In den Alkalisilikaten und Alkalialuminaten bedeutet Alkali bevorzugt Natrium und gegebenenfalls Kalium. In den Alkalisilikaten bzw. deren Lösungen hat das Gewichtsverhältnis $SiO_2$ zu $Na_2O$ einen Wert von 1,5 bis 4,0. In den Alkalialuminaten bzw. deren Lösungen soll das Molverhältnis $Na_2O$ zu $Al_2O_3$ größer 1,05, vorzugsweise 1,05 bis 1,50 sein.

Das verfestigende Gemisch aus Rückständen und den Bindemitteln kann ein Trockengewicht von 0,8 bis 1,6 g/cm³ erreichen, so daß auf der Deponie pro m³-Deponievolumen 0,8 bis 1,6 t der Rückstandsprodukte gelagert werden können. Vorzugsweise werden die Rückstandsprodukte als Formkörper oder gegebenenfalls als auszugießende Masse auf der Deponie gelagert. Soweit Formkörper hergestellt werden, wird die Form von Quadern oder Würfeln wegen der geringen Platzbeanspruchung gewählt. Sofern Baustoffe hergestellt werden,können beliebige Formkörper hergestellt werden.

Der Deponiestoff d.h. das verfestigende Gemisch kann am Ort der Deponie oder beispielsweise am Ort der Entstehung der Rückstände gemischt werden. Gegebenenfalls ist es möglich, zunächst ein rieselfähiges Produkt herzu stellen und auf der Deponie durch Druck zu verdichten. Die Härtung zum verfestigten Gemisch bzw. Formkörper ergibt gute Werte.

Es ist ein besonderer Gegenstand der Erfindung, den Gemischen bzw. Formkörpern Rückstände mit Gehalten von z.B. Kalziumsulfat zuzusetzen, wie diese bei Reinigung von Rauchgas von Feuerungen in Kraftwerken und Industrieanlagen durch die Maßnahmen der Rauchgasentschwefelung entstehen.

Die erhaltenen Produkte in Form von Formkörpern werden in der in der Bauindustrie üblichen Weise nach DIN 18127, 18130, 18121 und DIN 18200 geprüft, wobei die Werte für Druckfestigkeit und Bruchstauchung L den für Baustoffe erforderlichen Werten genügen. Es ist von besonderem Vorteil, daß der Durchlässigkeitsbeiwert durch den Einfluß des erfindungsgemäßen Bindemittels außerordentlich niedrig liegt d.h. daß im triaxialen Durchlässigkeitsversuch nach DIN 18130 ein sehr geringer Durchlässigkeits-Beiwert von $k_f$ festgestellt wird, der eine sehr geringe Durchlässigkeit für Wasser anzeigt, sodaß auch wasserlösliche und mit Wasser eluierbare gegebenenfalls in den Rückständen enthaltene Schadstoffe auf der Deponie bzw. aus dem Baustoff nicht entfernt werden können und sicher gebunden bleiben.

Beispiel 1

Flugstaub aus einer Müllverbrennungsanlage wird mit soviel Wasser verrührt, daß das Gewichts-Verhältnis von Wasser zu Feststoff 0,35 beträgt. Dieser Mischung wird 0,75 Gew.-%, bezogen auf den Flugstaub, eines Gemischs aus festem Alkalisilikat und festem Alkalialuminat zugegeben, das gleiche Gewichtsteile festes Alkalisilikat der Zusammensetzung von 63 Gew.-% $SiO_2$, 19 Gew.-% $Na_2O$ und 18 Gew.-% Wasser und festem Alkalialuminat der Zusammensetzung von 53 Gew.-% $Al_2O_3$, 38 Gew.-% $Na_2O$ und 9 Gew.-% Wasser enthält. Zur Homogenisierung wird 2 bis 3 Minuten intensiv gemischt. Das so erhaltene Produkt wird in einem Proctor-Topf nach DIN 18127 durch ein Fallgewicht verdichtet. Eine Meßreihe von 5 Einzelversuchen ergibt nach DIN 18127 Mittelwerte der Trockendichte von 1,226 g/cm³, der Feuchtmasse von 1,65 g/cm³ und nach DIN 18121 einen mittleren Wassergehalt W von 0,348. Für diese Versuchsserie wird nach DIN 18130 im triaxialen Durchlässigkeitsversuch ein mittlerer Durchlässigkeits-Beiwert von $k_f = 7,6 \cdot 10^{-11}$ m/s, eine Druckfestigkeit von 1,03 MN/m² und die Bruchstauchung L von 1,60 % gemessen.

Beispiel 2

Rückstände aus einer Verbrennungsanlage, die nach dem Wirbelschichtverfahren arbeitet, wird mit soviel Wasser verrührt, daß das Gewichtsverhältnis von Wasser zu Feststoff 0,29 beträgt. Dieser Mischung wird 0,70 Gew.-% des in Beispiel 1 genannten Gemischs aus Alkalisilikat und Alkalialuminat zugemischt.

Das so erhaltene Produkt wird in einem Proctor-Topf nach DIN 18127 verdichtet.

Das Produkt hat eine Trockendichte von 1,43 g/cm³ mit einem Wassergehalt von W = 0,289 und eine feuchte Masse von 1,84 g/cm³. Der Durchlässigkeits-Beiwert $k_f$ wird zu $5 \cdot 10^{-11}$ m/s bestimmt.

Beispiel 3

Flugstaub aus einem Braunkohlekraftwerk und die im Entschwefelungsprozeß anfallende Suspension mit einem Feststoffanteil von 36 Gew.-% wird miteinander in einem Verhältnis gemischt, daß ein Gewichtsverhältnis von Wasser zu Gesamtfeststoff von 0,27 erhalten wird. Diesem Gemenge werden 0,5 Gew.-%, bezogen auf die gesamten Feststoffe, des Gemisches als Alkalisilikat und Alkalialuminat nach Beispiel 1 zugefügt. Zur Homogenisierung wird 3 Minuten intensiv gerührt. Die Masse bindet innerhalb weniger Stunden zu festen Körpern ab.

In einem Vergleichsversuch ohne das erfindungsgemäße Bindemittel tritt keine Verfestigung ein.

Beispiel 4

Beispiel 3 wird wiederholt, jedoch wird soviel Suspension aus dem Entschwefelungsprozeß unter Rühren zugegeben, daß eine fließfähige und pumpbare Suspension mit einem Gewichtsverhältnis von Wasser zu den Feststoffen von 0,54 entsteht. Darauf werden 0,6 Gew.-%, bezogen auf die Feststoffe, des im Beispiel 1 genannten Alkalisilikats und Alkalialuminats im Gewichtsverhältnis 3,0 : 1 zugegeben. Diese Suspension wird auf eine Deponie gepumpt und bildet nach dem Trocknen eine Masse von guter Festigkeit mit einer Trockendichte von 1,2 g/cm$^3$.

Beispiel 5

Von einem Flugstaub einer Müllverbrennungsanlage werden 1350 g mit 415,8 g Wasser vermischt. Zu diesem Gemenge werden 14,3 g einer wässrigen Natriumsilikatlösung der Zusammensetzung von 26,9 Gew.-% $SiO_2$, 8 Gew.-% $Na_2O$ und 65,1 Gew.-% Wasser sowie 11,7 g einer wässrigen Natriumaluminatlösung der Zusammensetzung von 23 Gew.-% $Al_2O_3$, 18 Gew.-% $Na_2O$ und 59 Gew.-% Wasser zugegeben. Das Gemisch wird zur Homogeniseirung 5 Minuten intensiv durchgemischt. Anschließend wird wie in Beispiel 1 beschrieben verdichtet. Es wird eine Trockendichte von 1,33 g/cm$^3$ bei einem Wassergehalt W = 0,318 sowie einer Feuchtmasse von 1,75cm$^3$ gemessen. Die Masse bindet innerhalb von 2 Stunden ab. Der Druchlässigkeits-Beiwert $k_f$ für den Prüfkörper beträgt 8,5 $\cdot$ 10$^{-11}$ m/s.

Ansprüche

1. Verfestigendes Gemisch aus Rückständen mit gegebenenfalls Gehalten von Schadstoffen mit Eignung zur Deponierung oder als Baumaterial, gekennzeichnet durch Gehalte von Wasser, Alkalisilikat und Alkalialuminat.

2. Gemisch nach Anspruch 1, gekennzeichnet dadurch, daß der Anteil an Alkalisilikat 0,05 bis 5 Gew.-Teile, bezogen auf 100 Gew.-Teile Rückstand,beträgt.

3. Gemisch nach Anspruch 1, gekennzeichnet dadurch, daß der Anteil an Alkalialuminat 0,05 bis 5 Gew.-Teile, bezogen auf 100 Gew.-Teile Rückstand, beträgt.

4. Gemisch nach Anspruch 1, gekennzeichnet dadurch, daß das Gewichtsverhältnis von Wasser zu Rückständen von 0,05 bis 70 beträgt.

5. Gemisch nach mindestens einem der vorangehenden Ansprüche, dadurch gekennzeichnet, daß Rückstände aus der Rauchgasentschwefelung, vorzugsweise bis zu 30 Gew.-Teilen je 100.-Teile der Rückstände, enthalten sind.

6. Gemisch nach mindestens einem der vorangehenden Ansprüche, dadurch gekennzeichnet, daß das Trockengewicht 0,8 bis 1,6 t je m$^3$ beträgt.

7. Gemisch nach mindestens einem der vorangehenden Ansprüche, dadurch gekennzeichnet, daß im Alkalialuminat bzw. dessen Lösungen vorzugsweise das Molverhältnis $Me_2O/Al_2O_3$ größer als 1,05, sehr bevorzugt 1,15 bis 1,35 beträgt und Me vorzugsweise Na oder ggf. K bedeutet.

8. Gemisch nach einem der vorangehenden Ansprüche, dadurch gekennzeichnet, daß im Alkalisilikat bzw. dessen Lösungen das Gewichtsverhältnis $SiO_2/MeO$ 1.5 bis 4,0, vorzugsweise 2,0 bis 3,9 beträgt und Alkali Na oder ggf. K bedeutet.

9. Verfahren zur Herstellung des verfestigenden Gemisches nach mindestens einem der vorangehenden Ansprüche, dadurch gekennzeichnet, daß Rückstände mit ggf. Gehalten von zu deponierenden Schadstoffen in einer Mischanlage mit wäßrigen Lösungen oder Suspensionen von Alkalisilikaten und Alkalialuminaten gründlich vermischt und als gießfähige, pumpbare oder zu verdichtende Mischung einer Deponie zugeführt oder zu Formkörpern geformt wird.

10. Verfahren nach Anspruch 9, dadurch gekennzeichnet, daß Rückstände der Rauchgasentschwefelung zugesetzt sind.

11 . Verfahren nach einem der Ansprüche 9 oder 10, dadurch gekennzeichnet, daß verformte und erhärtete Gemische als Baustoffe o. dgl . verwendet werden.